# FASCICULE DE BREVET EUROPEEN

(11) **EP 0 941 916 B1**
(45) Date de publication et mention de la délivrance du brevet: **01.09.2004**
(21) Numéro de dépôt: 99400607.0
(22) Date de dépôt: 12.03.1999
(51) Int. Cl.: B62K 21/04, B62K 25/08

(54) **Fourche télescopique perfectionnée et véhicule correspondant**
Telescopische Gabelaufhängung
Telescopic fork suspension

(30) Priorité: 12.03.1998 FR 9803064
(43) Date de publication de la demande: 15.09.1999
(73) Titulaire: Offenstadt, Eric, 95520 Osny (FR); Tecmas, 18000 Bourges (FR)
(72) Inventeur: Offenstadt, Eric, 95520 Osny (FR)
(74) Mandataire: Boutin, Antoine

(56) Documents cités:
- FR-A- 2 578 505
- FR-A- 2 744 980
- US-A- 4 260 170
- US-A- 4 542 910

## Description

L'invention est relative à un agencement particulier des organes d'une fourche télescopique ainsi qu'à un véhicule équipé d'une fourche télescopique ainsi agencée.

L'invention est particulièrement utile dans l'application aux cycles, motocycles, motocyclettes, scooters, vélomoteurs, tricycles et autres véhicules à roue avant équipés d'une suspension comportant au moins un élément amortisseur.

Dans la présente demande, on désigne par «axe de direction» l'axe géométrique de la colonne de direction, ainsi que l'arbre matériel correspondant; on désigne par «axe de roue» l'axe géométrique de rotation de la roue et l'arbre matériel correspondant; et on désigne par «té» un élément de liaison mécanique entre les éléments amortisseurs et un moyen de direction faisant ou non partie de la fourche télescopique.

Dans les fourches télescopiques de l'art antérieur, la somme des déports d'une part entre l'axe de direction et le plan passant par les axes des éléments amortisseurs télescopiques et d'autre part entre le plan passant par les axes desdits éléments amortisseurs télescopiques et l'axe de rotation de la roue avant est égale au déport géométrique entre l'axe de direction et l'axe de roue.

Le déport entre l'axe de direction et le plan passant par les éléments amortisseurs télescopiques induit un bras de levier inertiel desdits éléments amortisseurs télescopiques, qui procure une fonction auto-directionnelle favorable à la maniabilité dès que l'on commence à incliner le véhicule. Le déport au niveau de l'axe de roue entre le plan passant les éléments amortisseurs télescopiques et ledit axe de roue induit un couple au freinage qui s'oppose au couple de basculement dû aux pinces de frein à disque et améliore le coulissement de la fourche lors de freinages intensifs.

Dans ces fourches télescopiques de type connu, utilisées en particulier sur des motocyclettes tout terrain où l'on ne souhaite pas obtenir une fonction auto-directionnelle qui n'est pas souhaitable pour l'exécution des sauts, on souhaite obtenir un bon coulissement de la fourche télescopique et on positionne les éléments amortisseurs télescopiques en arrière de l'axe de roue et en conséquence à proximité de l'axe géométrique de la direction. Au contraire, dans le cas de motocyclettes de tourisme ou de sport, dans lesquelles la fonction auto-directionnelle ou d'auto-braquage est souhaitable pour la maniabilité et la tenue de route, on préfère positionner généralement l'axe de rotation de la roue sous les éléments amortisseurs télescopiques, ce qui produit par conséquent un déport des éléments amortisseurs télescopiques par rapport à l'axe géométrique de la direction.

Des solutions intermédiaires peuvent également être retenues, dans lesquelles le déport géométrique entre l'axe de direction et l'axe de roue reste égal à la somme du déport entre l'axe de direction et le plan défini par les axes des éléments amortisseurs télescopiques et du déport entre le plan défini par les axes des éléments amortisseurs télescopiques et l'axe de rotation de la roue.

Le document US 4.260.170 décrit une motocyclette de l'art antérieur dans laquelle l'axe de roue est déporté vers l'avant par rapport à l'axe de chaque élément amortisseur télescopique. Le but visé dans ce document est de fournir une motocyclette dans laquelle l'axe de roue est déporté vers l'avant par rapport à l'axe de chaque élément amortisseur télescopique, tout en conservant la même tenue de route qu'une motocyclette dans laquelle l'axe de roue est situé sous le fourreau de l'élément amortisseur télescopique, c'est-à-dire sans aucun changement dans la chasse, l'emplacement et l'angle du tube de direction, l'empattement et la distribution des masses entre les roues avant et arrière. A cet effet, l'assemblage frontal de fourche est incliné de manière à faire un angle avec la colonne de direction, de l'ordre de 1.5 degrés d'angle sexagésimal. En raison de l'allongement des fourreaux et des tubes d'amortisseur qui est permis par cette disposition, l'amortissement de cette motocyclette de type connu s'effectue selon une course plus importante, ce qui conduit à une amélioration de la suspension de la motocyclette.

Cependant, cette motocyclette de type connu ne permet pas d'améliorer notablement la tenue de route d'un véhicule ou d'une motocyclette en raison du fait que les données géométriques relatives à la tenue de route sont sensiblement les mêmes en accélération et en freinage, alors qu'il est souhaitable d'obtenir une meilleure stabilité en phase d'accélération. Par contre, lorsque l'on commence à incliner la motocyclette en entrée de virage, on recherche une meilleure maniabilité.

L'invention a pour but de remédier aux inconvénients de la technique connue en fournissant une fourche télescopique avec un nouvel agencement des déports permettant d'obtenir un bon coulissement au freinage, une faculté auto-braquante en entrée de virage, en même temps qu'une amélioration de la stabilité à l'accélération.

L'invention repose sur la combinaison de déports différents lors des phases d'accélération et de freinage. En particulier, cette combinaison des déports est obtenue en associant des déports de «tés» avec un déport d'axe de roue dont les valeurs sont différentes en accélération et en freinage, et qui sont obtenus en déportant la partie supérieure de l'axe de direction, avec modification moindre du déport dans la partie inférieure de l'axe de direction, vers l'axe de roue.

L'invention a pour objet une fourche télescopique, comportant au moins un élément amortisseur, à la base duquel se trouve au moins un support d'axe de roue, dans laquelle chaque élément amortisseur est relié à l'axe de direction par un "té" intérieur et un "té" supérieur, caractérisée en ce que lesdits "tés" sont déportés de manière prédéterminée pour obtenir une variation de déport géométrique au niveau de l'axe de roue entre une valeur élevée lorsque l'élément amortisseur est comprimé et une valeur faible lorsque l'élément amortisseur est détendu, de manière à améliorer la tenue de route d'un véhicule auquel la fourche télescopique est destinée, en fonction de l'assiette dudit véhicule.

Selon d'autres caractéristiques alternatives de l'invention:
- la variation de déport géométrique au niveau de l'axe de roue s'effectue dans une plage comprise entre 3,5 mm et 50 mm,
- l'axe de roue est déporté vers l'avant par rapport à l'axe de chaque élément amortisseur,
- l'axe de direction, est destiné à être placé et à pivoter dans un tube de direction solidaire du cadre du véhicule, ainsi qu'un "té" inférieur reliant de manière fixe et prédéterminée l'élément amortisseur de l'axe de direction, le "té" supérieur reliant l'élément amortisseur à l'axe de direction étant ajustable ou réglable grâce à un moyen mécanique, par exemple du genre excentrique, vis ou crémaillère, de manière à régler ou ajuster le "té" supérieur en fonction de la distance séparant les "tés" inférieur et supérieur en vue d'obtenir la variation désirée de déport géométrique,
- au moins une pince de frein à disque est placée sur l'avant du support de roue ou de l'élément amortisseur,
- chaque élément amortisseur est associé à un dispositif de réglage d'amortissement, soit en compression, soit en détente, soit en compression et en détente, en vue d'ajuster l'amortissement en fonction de ladite variation de déport géométrique au niveau de l'axe de roue.

L'invention a également pour objet un ensemble d'au moins une pièce mécanique comportant au moins un "té" inférieur et/ou supérieur pour fourche télescopique, en vue d'un remplacement de pièce mécanique pour une réparation ou une modification d'une fourche télescopique de l'art antérieur.

L'invention a enfin pour objet un véhicule à une roue avant directrice, notamment motocyclette, équipée d'une fourche télescopique.

L'invention sera mieux comprise grâce à la description qui va suivre donnée à titre d'exemple non limitatif en référence aux dessins annexés dans lesquels :

La figure 1 représente schématiquement une vue en élévation d'un véhicule à roue avant directrice comportant une fourche télescopique selon l'invention, en phase d'accélération maximale.

La figure 2 représente schématiquement une vue en élévation d'un véhicule à roue avant directrice comportant une fourche télescopique selon l'invention, en phase de freinage maximal.

La figure 3 représente schématiquement une vue en élévation d'un montage comportant une fourche télescopique que l'homme de l'art appelle «inversée», en raison du fait qu'elle comporte les fourreaux dans la partie supérieure et les tubes coulissants à l'intérieur de ces fourreaux dans la partie inférieure.

La figure 4 représente schématiquement une vue en élévation d'un autre montage comportant une fourche télescopique selon l'invention, dont l'axe de roue est déporté vers l'avant des éléments télescopiques.

La figure 5 représente schématiquement une vue en élévation d'une fourche télescopique selon l'invention analogue à la figure 3.

La figure 6 représente schématiquement une vue en élévation d'un montage comportant une fourche télescopique selon l'invention analogue à la figure 4.

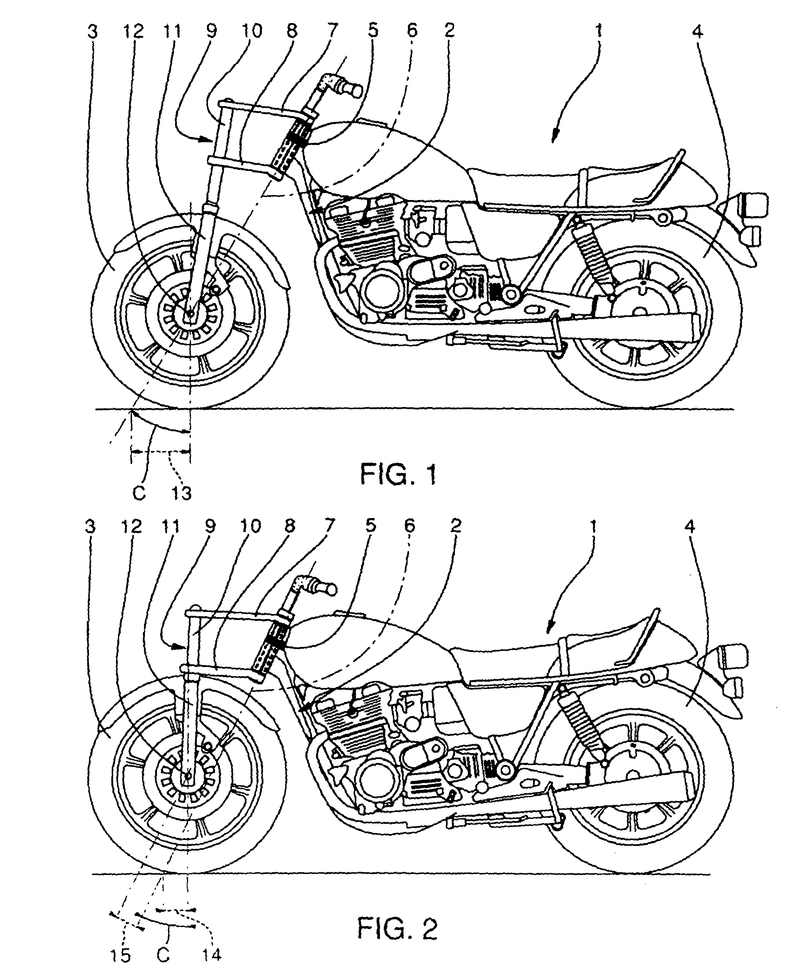

En référence à la figure 1, un véhicule selon l'invention comportant une fourche télescopique est constitué par une motocyclette 1 comportant un cadre 2 avec des éléments usuels, une roue 3 avant directrice et une roue arrière 4 de direction fixe. Une colonne de direction 5 est prévue sur le cadre et définit un axe de direction 6. L'axe matériel de direction correspondant est relié par deux «tés», un «té» supérieur 7 et un «té» inférieur 8 à des éléments amortisseurs 9. Chaque élément amortisseur 9 comporte un tube coulissant 10 et un fourreau 11 dans lequel coulisse le tube 10. Le montage d'amortisseur 9 représenté aux figures 1 et 2 est un montage dit «normal» ou «non inversé» par l'homme du métier, dans lequel les tés 7 et 8 sont fixés au tube coulissant 10, tandis que le fourreau 11 est relié à l'axe de roue 12.

L'axe 12 de la roue avant est situé à la base et dans l'axe de l'élément amortisseur 9 : le déport entre le plan défini par les axes des éléments amortisseurs télescopiques 9 et l'axe 12 de rotation de la roue avant 3 est par conséquent nul ou négligeable.

L'angle de chasse C est défmi par la verticale passant par l'axe 12 de la roue avant 3 et l'axe 6 géométrique de direction, tandis que la valeur de la chasse 13 est définie comme la distance entre le point d'intersection de la verticale passant par l'axe 12 de roue avec le sol et le point d'intersection de l'axe 6 de direction avec le sol.

Sur la figure 1, tandis que le déport géométrique entre l'axe de direction 6 et l'axe de roue 12 est nul ou négligeable, la chasse 13 présente une valeur notablement supérieure à la valeur de la chasse des fourches télescopiques de l'art antérieur.

Cette disposition de phase d'accélération maximale correspond à une détente maximale des éléments amortisseurs télescopiques 9 et à une fonction stabilisante importante en raison de la valeur importante de la chasse 13.

En référence à la figure 2, les éléments identiques ou fonctionnellement équivalents aux éléments de la figure 1 sont repérés par des chiffres de référence identiques.

La différence correspond à un écrasement maximal des éléments amortisseurs 9 dû au freinage important de la motocyclette 1, ou à son écrasement dans les virages dûs à la force centrifuge.

En raison de la compression maximale de la fourche télescopique selon l'invention, un déport non nul de valeur 15 est produit entre l'axe de roue 12 et l'axe 6 géométrique de direction. L'apparition du déport 15 produit une diminution de la chasse 14 définie comme la distance entre le point d'intersection passant par la verticale de l'axe 12 de roue avec le sol et le point d'intersection de l'axe géométrique 6 de direction avec le sol.

La chasse 14 obtenue en phase de freinage maximal est notablement inférieure à la chasse des fourches télescopiques de l'art antérieur, tandis que la chasse 13 obtenue en phase d'accélération maximale est notablement supérieure à la chasse des fourches télescopiques de l'art antérieur.

Bien que l'invention soit décrite en référence à une motocyclette équipée d'une fourche télescopique selon l'invention, elle n'est nullement limitée à cet exemple de réalisation et couvre au contraire toute variante de réalisation, notamment les variantes dans lesquelles chaque élément amortisseur est relié à l'axe de direction par un seul té (vélomoteur, cyclomoteur, cycle et bicyclette) et toute variante d'ensemble de pièces mécaniques pour la modification ou le remplacement des fourches télescopiques sur les véhicules existants.

Dans l'état de la technique connue, les fourches télescopiques des motocyclettes de sport ou de compétition sont couramment livrées avec un choix de trois déports différents entre l'axe de roue et l'axe géométrique de direction : 27,5 mm ; 30,0 mm ; 32,5 mm. Cette progression par valeur de 2,5 mm est due au fait qu'aucune différence notable de comportement routier n'est perceptible pour des différences inférieures à 2,5 mm. Cette valeur de 2,5 mm correspond sensiblement à l'angle de 1,5° qui avait été retenu dans le document US 4 260 170 comme admissible pour ne pas modifier notablement la tenue de route d'une motocyclette après remplacement de la fourche télescopique.

La comparaison des figures 1 et 2 met en évidence l'amélioration de la stabilité à l'accélération due à une chasse importante (figure 1) et de la stabilité en vitesse de croisière correspondante, ainsi que de la maniabilité en entrée de courbe et de la stabilité au freinage (figure 2) due à l'augmentation simultanée du déport géométrique et de l'empattement de la motocyclette lors de la compression maximale des éléments amortisseurs 9. Les dimensions des "tés" 7 et 8 ont été volontairement portées à leurs dimensions maximales sur les figures 1 et 2 pour mettre en évidence l'apport de l'invention, en faisant apparaître un déport géométrique sensiblement nul lors de la détente maximale des amortisseurs 9 (figure 1) et en faisant apparaître des éléments amortisseurs 9 sensiblement verticaux en position d'écrasement maximal (figure 2), ce qui entraîne une variation de déport géométrique dans une plage comprise entre 3,5 et 50 mm.

A titre d'exemple, dans un mode de réalisation préféré de l'invention, la variation de déport géométrique en fonction de l'assiette du véhicule sera comprise entre 10 et 25 mm.

Dans une autre variante de réalisation non représentée, applicable en particulier aux véhicules légers du genre vélomoteurs, cyclomoteurs, bicyclettes ou autres cycles, comportant un seul "té" de fourche inférieure solidaire de l'axe de direction, on obtiendra les effets de l'invention, en inclinant la partie supérieure de l'axe de direction vers l'arrière, de manière à obtenir une variation de déport géométrique au niveau de l'axe de roue entre une valeur faible lorsqu'un élément amortisseur est comprimé et une valeur élevée lorsque l'élément amortisseur est détendu, selon le même principe que celui décrit en référence aux figures 1 et 2.

Dans ces applications, l'axe de roue 12 peut être situé dans le plan défini dans les axes des éléments amortisseurs 9 ou être déporté par rapport à celui-ci.

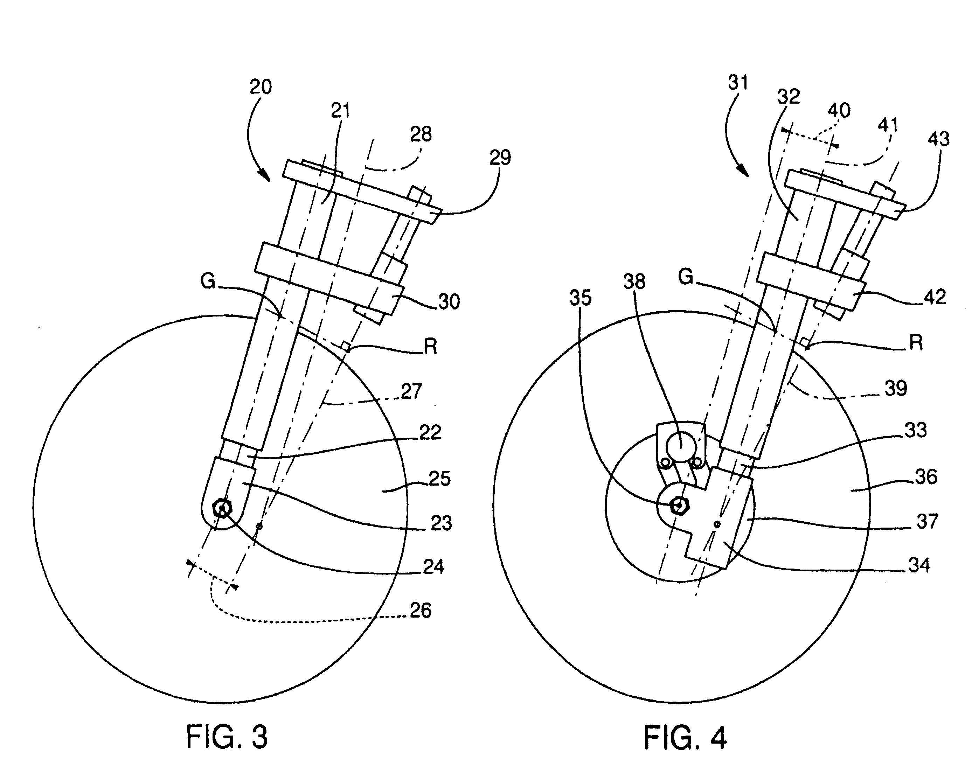

En référence à la figure 3, une fourche télescopique 20 selon l'invention est une fourche télescopique dite "inversée" par l'homme du métier, en raison du fait que les fourreaux 21 d'amortisseurs sont situés en partie supérieure, tandis que les tubes coulissants 22 sont situés en partie inférieure et portent des embases 23 d'axe 24 de roue avant 25.

La fourche télescopique 20 "inversée" est en position de compression maximale.

Dans cette position, le déport géométrique dont dépend la stabilité du véhicule à roue avant 25 directrice est la mesure 26 de la distance entre l'axe de roue 24 et l'axe de direction 27. Dans l'exemple représenté, la distance 26 entre l'axe de roue 24 et l'axe de direction 27 d'une fourche télescopique selon l'invention est choisie égale à la distance d'un axe de direction 28 de l'art antérieur avec l'axe 24 de roue d'une fourche télescopique de l'état de la technique connu.

Pour obtenir une variation de déport géométrique au niveau de l'axe 24 de roue avant 25 entre une valeur élevée lorsque l'élément amortisseur est comprimé et une valeur faible lorsque l'élément amortisseur est détendu, on prévoit selon l'invention que les tés supérieur 29 et inférieur 30 sont déportés de manière prédéterminée correspondant à une distance entre le haut de l'élément amortisseur et le haut de l'axe de direction supérieure à celle séparant le bas de l'élément amortisseur du bas de l'axe de direction.

Il résulte de cette augmentation de déport inertiel une faculté d'auto-braquage et une maniabilité améliorées.

En désignant par G le centre de gravité des éléments télescopiques en compression, on définit un bras de levier GR de déport inertiel de la fourche télescopique par rapport à l'axe géométrique de direction 27. Ce déport inertiel de fourche télescopique en compression est par conséquent proportionnel à la distance GR.

En raison de la disposition relative prédéterminée des tés supérieur 29 et inférieur 30, la longueur du té supérieur 29 est supérieure à la longueur du té inférieur 30 d'une valeur dépendant de la distance séparant le té supérieur 29 du té inférieur 30.

La conception d'une fourche télescopique selon l'invention est donc dictée par la variation de déport géométrique souhaitée, ce qui fournit ensuite la relation reliant les tés supérieur 29 et inférieur 30 en fonction de la distance séparant ces tés supérieur 29 et inférieur 30.

En référence à la figure 4, une autre fourche télescopique 31 selon l'invention est également une fourche de type "inversée" avec un fourreau supérieur 32 et un tube coulissant 33, une embase 34 de support d'axe 35 de roue 36, un disque de frein 37 associé à une pince de frein 38 portée par l'embase 34.

De préférence, la pince 38 de frein à disque 37 est placée sur l'avant du support 34 de roue ou de l'élément amortisseur comportant le tube coulissant 33 dans le fourreau 32.

Dans cette disposition, le déport de l'axe 35 de roue par rapport à l'axe de direction 39 est égal à la distance 40, choisie identique au déport d'une fourche télescopique de l'art antérieur entre l'axe de roue 35 et l'axe géométrique 41 de direction de cette fourche télescopique de l'art antérieur.

L'invention permet ainsi de conserver un déport géométrique de l'art antérieur en un point prédéterminé de la course, par exemple position de compression maximale de la fourche télescopique si le but choisi est de privilégier la réduction du déport géométrique à l'accélération pour obtenir une meilleure stabilité.

Si on souhaite obtenir une meilleure maniabilité en position de compression de la fourche télescopique, on conserve le déport géométrique de l'art antérieur en position de détente de la fourche télescopique.

On peut également choisir une solution intermédiaire, en fonction des caractéristiques désirées pour le véhicule correspondant.

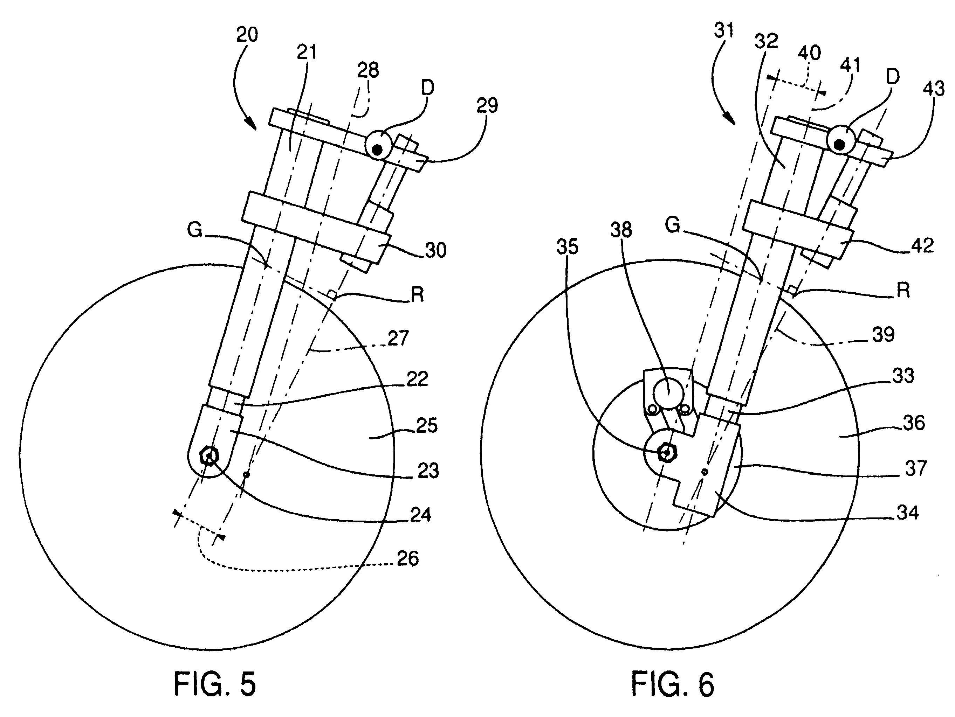

La figure 5 comporte des éléments identiques ou fonctionnellement équivalents à ceux de la figure 3 repérés par les chiffres de référence identiques.

Dans cette disposition, le té supérieur 29 comporte un dispositif mécanique D de réglage du déport du té supérieur, de manière à ajuster le déport du té supérieur 29 en fonction de la hauteur de la colonne de direction ou de la distance séparant les tés supérieur 29 et inférieur 30.

Ce dispositif D de réglage de déport peut être constitué par un ou plusieurs excentriques, un ou plusieurs éléments à vissage, une ou plusieurs crémaillères ou tout autre moyen équivalent permettant de régler le déport et la longueur du té supérieur 9.

La figure 6 représente une fourche télescopique analogue à la fourche télescopique de la figure 4 et comporte des éléments identiques ou fonctionnellement équivalents à ceux de la figure 4 repérés par les chiffres de référence identiques.

Cette fourche télescopique comporte également au niveau du té supérieur 43 un dispositif D de réglage mécanique de la longueur du té supérieur 43, pour ajuster une fourche télescopique de remplacement sur une motocyclette existante et rendre cette motocyclette conforme à l'invention. A cet effet, le dispositif D de réglage constitué par un ou plusieurs excentriques, un ou plusieurs éléments à vissage ou à crémaillère ou tout autre dispositif équivalent permet d'obtenir un déport relatif prédéterminé entre té inférieur 42 et té supérieur 43 en fonction de la hauteur de la colonne de direction ou de l'espacement des tés inférieur 42 et supérieur 43.

Dans toutes les variantes représentées, l'invention a pour but d'augmenter le facteur de maniabilité grâce à la fonction auto-directionnelle ou auto-braquante procurée par les bras de levier des inerties directionnelles tout en conservant un déport géométrique de à l'art antérieur, pour une assiette prédéterminée du véhicule.

Cette conservation d'un déport géométrique prédéterminé de l'art antérieur pour une assiette prédéterminée du véhicule est un facteur essentiel de la stabilité sur les fourches télescopiques.

En outre, en particulier dans le cas où l'axe de roue est situé à l'avant des éléments amortisseurs, on ajoute à ce facteur de maniabilité le facteur d'amélioration du coulissement au freinage propre aux fourches à axe de roue déporté notablement sur l'avant des éléments amortisseurs télescopiques, par exemple déporté d'une distance supérieure à 10 mm.

L'invention permet ainsi de concevoir et d'utiliser judicieusement le déport géométrique le plus favorable sans que la valeur imposée dudit déport géométrique ne vienne limiter la valeur des déports inertiaux, étant donné que leur choix devient indépendant.

L'invention concerne par conséquent plusieurs agencements de fourches télescopiques qui possèdent chacune un axe de direction, dont la distance à l'axe de roue directrice est déterminée par la valeur d'un déport géométrique choisi pour une bonne stabilité et dont la partie supérieure au niveau de la colonne de direction et des tés de raccordement correspondants se trouve reculée vers l'arrière du véhicule par rapport aux éléments amortisseurs télescopiques. Il en résulte par conséquent que les tés des fourches télescopiques selon l'invention présentent généralement un déport inertiel entre les éléments amortisseurs télescopiques et le sommet de l'axe de direction notablement plus important que le déport d'une fourche conventionnelle de type connu à déport géométrique égal.

L'invention n'est pas limitée par les variantes de réalisation décrites en référence aux figures 1 à 6, mais a généralement pour objet toute fourche télescopique permettant d'obtenir un déport géométrique prédéterminé au niveau de l'axe de roue et une variation de déport géométrique entre un état comprimé d'éléments amortisseurs et un état détendu d'éléments amortisseurs. A titre d'exemple, l'invention est appliquable à des fourches télescopiques dites "normales", ou "non inversées", ainsi qu'à des fourches télescopiques dites "inversées", à des fourches télescopiques dont l'axe de roue est situé sensiblement dans l'axe des éléments amortisseurs télescopiques, à des fourches télescopiques dont l'axe de roue est déporté vers l'avant des éléments amortisseurs télescopiques, comportant ou non un dispositif d'ajustage ou de de réglage du té supérieur, comportant ou non une pince de frein située en avant des éléments amortisseurs télescopiques, comportant ou non des réglages d'amortissement en détente, ou en compression, ou en détente et en cumpression des éléments amortisseurs ainsi qu'à tout autre combinaison ou agencement spécifique particulier n'ayant pas été combiné dans l'art antérieur avec la disposition relative d'axe géométrique de direction et d'élément amortisseur selon l'invention.

## Revendications

1. Fourche télescopique, comportant au moins un élément amortisseur (9, 21, 22, 32, 33), à la base duquel se trouve au moins un support (23, 34) d'axe (12, 24, 35) de roue (3, 25, 36), dans laquelle chaque élément amortisseur est relié à l'axe (6, 27, 39) de direction par un "té" inférieur (8, 30, 42) et un "té" supérieur (7, 29, 43), **caractérisée en ce que** lesdits "tés" (8, 30, 42 ; 7, 29, 43) sont déportés de manière prédéterminée pour obtenir une variation de déport géométrique au niveau de l'axe (12, 24, 35) de roue (3, 25, 36) entre une valeur élevée lorsque l'élément amortisseur (9, 21, 22 ; 32, 33) est comprimé et une valeur faible lorsque l'élément amortisseur est détendu, de manière à améliorer la tenue de route d'un véhicule auquel la fourche télescopique est destinée, en fonction de assiette dudit véhicule.

2. Fourche télescopique selon la revendication 1, **caractérisée en ce que** la variation de déport géométrique au niveau de l'axe de roue s'effectue dans une plage comprise entre 3,5 mm et 50 mm.

3. Fourche télescopique selon la revendication 1 ou la revendication 2, dans laquelle l'axe (35) de roue (36) est déporté vers l'avant par rapport à l'axe de chaque élément amortisseur (9, 21, 22; 32, 33).

4. Fourche télescopique, comportant au moins un élément amortisseur (9, 21, 22 ; 32, 33), à la base duquel se trouve au moins un support (23, 34) d'axe de roue (3, 25, 36), dans laquelle chaque élément amortisseur (9, 21, 22 ; 32, 33) est relié à l'axe (6, 27, 39) de direction par au moins un "té" inférieur (8, 30, 42), **caractérisée en ce que** la partie supérieure de l'axe (6, 27, 39) de direction est déportée de manière prédéterminée pour obtenir une variation de déport géométrique au niveau de l'axe (12, 24, 35) de roue entre une valeur élevée lorsque l'élément amortisseur (9,21,22;32,33) est comprimé et une valeur faible lorsque l'élément amortisseur est détendu, de manière à améliorer la tenue de route d'un véhicule auquel la fourche télescopique est destinée, en fonction de l'assiette dudit véhicule

5. Fourche télescopique selon la revendication 4, **caractérisée en ce que** la variation de déport géométrique au niveau de l'axe de roue s'effectue dans une plage comprise entre 3,5 mm et 50 mm.

6. Fourche télescopique selon l'une quelconque des revendications précédentes, comportant un axe de direction destiné à être placé et à pivoter dans un tube de direction solidaire du cadre du véhicule, ainsi qu'un "té" inférieur reliant de manière fixe et prédéterminée l'élément amortisseur à l'axe de direction, **caractérisée en ce que** le "té" supérieur reliant l'élément amortisseur à l'axe de direction est ajustable ou réglable grâce à un moyen (D) mécanique, par exemple du genre excentrique, vis ou crémaillère, de manière à régler ou ajuster le "té" supérieur (29, 43) en fonction de la distance séparant les "tés" supérieur (29, 43) et inférieur (30, 42), en vue d'obtenir la variation désirée de déport géométrique.

7. Fourche télescopique selon l'une quelconque des revendications précédentes, **caractérisée en ce qu'**au moins une pince (38) de frein à disque (37) est placée sur l'avant du support (34) de roue (36) ou de l'élément amortisseur (32, 33).

8. Fourche télescopique selon l'une quelconque des revendications précédentes, **caractérisée en ce que** chaque élément amortisseur (9, 21, 22 ; 32, 33) est associé à un dispositif (D) de réglage d'amortissement, soit en compression, soit en détente, soit en compression et en détente, en vue d'ajuster l'amortissement en fonction de ladite variation de déport géométrique au niveau de l'axe (12, 24, 35) de roue (3, 25, 36).

9. Ensemble d'au moins une pièce mécanique comportant au moins un "té" inférieur (8, 30, 42) et/ou supérieur (7, 29, 43) de fourche télescopique selon l'une quelconque des revendications précédentes.

10. Motocyclette à une roue avant directrice équipée d'une fourche télescopique selon l'une quelconque des revendications 1 à 8.

## Patentansprüche

1. Teleskopgabel mit wenigstens einem Dämpferelement (9, 21, 22; 32, 33), an dessen Basis sich wenigstens ein Lager (23, 34) für die Achse (12, 24, 35) eines Rades (3, 25, 36) befindet, wobei jedes Dämpferelement mit der Lenkachse (6, 27, 39) durch ein unteres "T-Stück" (8, 30, 42) und ein oberes "T-Stück" (7, 29, 43) verbunden ist,
**dadurch gekennzeichnet,**
**daß** die genannten "T-Stücke" (8, 30, 42; 7, 29, 43) in einer vorbestimmten Weise versetzt sind, um eine Änderung des geometrischen Versatzes in Höhe der Achse (12, 24, 35) des Rades (3, 25, 26) herbeizuführen zwischen einem hohen Wert, wenn das Dämpferelement (9, 21, 22; 32, 33) komprimiert ist, und einem niedrigen Wert, wenn das Dämpferelement entspannt ist, um das Straßenverhalten eines Fahrzeugs, für das die Teleskopgabel bestimmt ist, in Abhängigkeit von der Lage des Fahrzeugs zu verbessern.

2. Teleskopgabel nach Anspruch 1, **dadurch gekennzeichnet, daß** die Änderung des geometrischen Versatzes in Höhe der Achse des Rades in einem Bereich zwischen 3,5 mm und 50 mm erfolgt.

3. Teleskopgabel nach Anspruch 1 oder 2, bei der die Achse (35) des Rades (36) relativ zur Achse jedes Dämpferelements (9, 21, 22; 32, 33) nach vorn versetzt ist.

4. Teleskopgabel mit wenigstens einem Dämpferelement (9, 21, 22; 32, 33), an dessen Basis sich wenigstens ein Lager (23, 34) für die Achse eines Rades (3, 25, 36) befindet, wobei jedes Dämpferelement mit der Lenkachse (6, 27, 39) durch eine unteres "T-Stück" (8, 30, 42) verbunden ist,
**dadurch gekennzeichnet,**
**daß** der obere Teil der Lenkachse (6, 27, 39) in einer in einer vorbestimmten Weise versetzt sind, um eine Änderung des geometrischen Versatzes in Höhe der Achse (12, 24, 35) des Rades herbeizuführen zwischen einem hohen Wert, wenn das Dämpferelement (9, 21, 22; 32, 33) komprimiert ist, und einem niedrigen Wert, wenn das Dämpferelement entspannt ist, um das Straßenverhalten eines Fahrzeugs, für das die Teleskopgabel bestimmt ist, in Abhängigkeit von der Lage des Fahrzeugs zu verbessern.

5. Teleskopgabel nach Anspruch 4, **dadurch gekennzeichnet, daß** die Änderung des geometrischen Versatzes in Höhe der Achse des Rades in einem Bereich zwischen 3,5 mm und 50 mm erfolgt.

6. Teleskopgabel nach einem der vorhergehenden Ansprüche, mit einer Lenkachse, die dazu bestimmt ist, in einem mit dem Rahmen des Fahrzeugs fest verbundenen Lenkrohr angebracht und gedreht zu werden, sowie mit einem unteren "T-Stück", das das Dämpferelement in einer festen und vorbestimmten Weise mit der Lenkachse verbindet,
**dadurch gekennzeichnet,**
**daß** das obere "T-Stück", das das Dämpferelement mit der Lenkachse verbindet, durch ein mechanisches Mittel (D), z.B. nach Art eines Exzenters, einer Schnecke oder einer Zahnstange, so justierbar und regulierbar ist, daß das obere "T-Stück" (29, 43) in Abhängigkeit von dem Abstand zwischen dem oberen "T-Stück" (29, 43) und dem unteren "T-Stück" (30, 42) reguliert oder justiert wird, um die gewünschte Änderung des geometrischen Versatzes herbeizuführen.

7. Teleskopgabel nach einem der vorhergehenden Ansprüche, **dadurch gekennzeichnet, daß** an dem vorderen Teil des Lagers (34) des Rades (36) oder des Dämpferelements (32, 33) wenigstens eine Zange (38) einer Scheibenbremse (37) angeordnet ist.

8. Teleskopgabel nach einem der vorhergehenden Ansprüche, **dadurch gekennzeichnet, daß** jedem Dämpferelement (9, 21, 22; 32, 33) eine Vorrichtung (D) zur Dämpfungsregulierung entweder bei der Kompression oder bei der Entspannung oder bei der Kompression und der Entspannung zugeordnet ist, um die Dämpfung in Abhängigkeit von der genannten Änderung des geometrischen Versatzes in Höhe der Achse (12, 24, 35) des Rades (3, 25, 26) zu justieren.

9. Baugruppe mit wenigstens einem mechanischen Teil, die wenigstens ein unteres "T-Stück" (38, 42) und/oder ein oberes "T-Stück" (7, 29, 43) einer Teleskopgabel nach einem der vorhergehenden Ansprüche aufweist.

10. Motorrad mit einem vorderen Lenkrad, das mit einer Teleskopgabel nach einem der Ansprüche 1 bis 8 ausgestattet ist.

## Claims

1. A telescopic fork, comprising at least one damping element (9, 21, 22, 32, 33), at the base of which is located at least one axle (12, 24, 35) support (23, 24) for a wheel (3, 25, 36), in which each damping element is connected to the axle (6, 27, 39) by a lower "T" (8, 30, 42) and an upper "T" (7, 20, 43),
**characterised in that** the said "Ts" (8, 30, 42; 7, 29, 43) are offset in a predetermined manner so as to obtain a variation in geometric offset at the level of the wheel (3, 25, 36) axle (12, 24, 35) between a high value when the damping element (9, 21, 22; 32, 33) is. compressed and a lower value when the damping element is relaxed, so as to improve the roadholding of a vehicle for which the telescopic fork is intended, as a function of the attitude of the said vehicle.

2. A telescopic fork according to Claim 1,
**characterised in that** the variation in geometric offset at the level of the wheel axle is performed in a range between 3.5 mm and 50 mm.

3. A telescopic fork according to Claim 1 or Claim 2, in which the axle (35) of the wheel (36) is offset to the front in relation to the axis of each damping element (9, 21, 22; 32, 33).

4. A telescopic fork, comprising at least one damping element (9, 21, 22; 32, 33), at the base of which is located at least one support (23, 34) for a wheel (3, 25, 36) axle, in which each damping element (9, 21, 22; 32, 33) is connected to the steering axle (6, 27, 39) by at least a lower "T" (8, 30, 42),
**characterised in that** the upper part of the steering axle (6, 27, 39) is offset in a predetermined manner so as to obtain a variation in geometric offset at the level of the wheel axle (12, 24, 35) between a high value when the damping element (9, 21, 22; 32, 33) is compressed and a low value when the damping element is relaxed, so as to improve the roadholding of a vehicle for which the telescopic fork is intended, as a function of the attitude of the said vehicle.

5. A telescopic fork according to Claim 4,
**characterised in that** the variation in geometric offset at the level of the wheel axle is performed in a range between 3.5 and 50 mm.

6. A telescopic fork according to any one of the preceding Claims, comprising a steering axle intended to be placed and to pivot in a steering column tube integral with the frame of the vehicle, as well as a lower "T" connecting the damping element to the steering axle in a fixed, predetermined manner,
**characterised in that** the upper "T" connecting the damping element to the steering axle is adjustable or controllable thanks to a mechanical means (D), for example of the eccentric, screw or rack type, so as to control or adjust the upper "T" (29, 43) as a function of the distance separating the upper "T" (29, 49) and the lower "T" (30, 42), so as to obtain the desired variation in geometric offset.

7. A telescopic fork according to any one of the preceding Claims,
**characterised in that** at least one clip (38) of a disk brake (37) is placed on the front of the wheel (36) support (34) or of the damping element (32, 33).

8. A telescopic fork according to any one of the preceding Claims,
**characterised in that** each damping element (9, 21, 22; 32, 33) is associated with a damping control device (D), either compressed or relaxed, either compressed or relaxed, with a view to adjusting the damping as a function of the said variation in geometric offset at the level of the axle (12, 24, 35) of the wheel (3, 24, 36).

9. An assembly of a least one machine part comprising at least a lower "T" (8, 30, 42) and/or an upper "T" (7, 29, 43) of a telescopic fork according to any one of the preceding Claims.

10. A motorcycle having a front wheel equipped with a telescopic fork according to any one of Claims 1 to 8.
